# EUROPEAN PATENT APPLICATION

(11) **EP 4 628 449 A1**
(43) Date of publication of application: **08.10.2025**
(21) Application number: 25167847.0
(22) Date of filing: 01.04.2025
(51) Int. Cl.: C01B 32/956

(54) **PRODUCTION OF SILICON CARBIDE PARTICLES**

(30) Priority: 05.04.2024 US 202418628162
(71) Applicant: RTX Corporation, Farmington, CT 06032 (US)
(72) Inventor: JONSSON, NILS, Farmington, CT, 06032 (US)
(74) Representative: Dehns

(57) **Abstract**

The preparation of amorphous SiC particles (45) is disclosed wherein a polymeric ceramic precursor is subjected to plasma spraying. The polymeric ceramic precursor, for example, in the form of atomized droplets, is injected into a plasma jet (40) and subject to pyrolysis. The amorphous SiC particles (45) can be used in the preparation of environmental barrier coatings (EBCs) for protection of ceramic matrix materials (CMCs). For example, a bond coat containing the amorphous SiC particles (45) can be applied to a CMC substrate by slurry processing.

## Description

### Field of the Invention

The present disclosure relates generally to methods for producing SiC particles/powders. **In** particular, the present disclosure relates to the preparation of SiC particles for use in the production of environmental barrier coatings (EBCs) for protection of ceramic matrix materials (CMCs).

### Background

SiC particles can be used environmental barrier coatings (EBCs), particularly in bond coats, as gettering particles to reduce the permeation of oxidants, such as oxygen and water, into the underlying substrate. Known processes for preparing SiC powders include the Acheson process which involves heating a mixture of silicon dioxide and carbon. SiC can also be synthesized using electrothermal fluidized bed technology. These methods produce SiC material that is conductive and has have relatively high crystallinity. Additionally, monolithic SiC material can be obtained by curing pre-ceramic polymers and then pyrolyzing the cured polymeric material. In each of these processes, the resultant material is then crushed and milled (e.g., ball milled) to a desired particle size.

Particles obtained by such processes are angular, highly irregular particles having high aspect ratios and sharp edges. They can also include ultrafine particles with possess high surface areas. Such structural features of the powders lead to problems in subsequent processing. Particles with high irregularity, sharp edges, and high aspect ratios exhibit reduced flowability. Due to their low flowability and high aspects ratios, the application of slurries made from such particles to a substrate via spray processes can be problematic as nozzle clogging can result. Also, highly irregular particles can cause packing difficulties which in turn can result in coatings formed therefrom having high porosity. Further, when used for EBC coatings, powders containing ultrafine particles may adversely affect processing and performance properties. For example, the presence of ultrafine particles can adversely impact slurries made from the particles by significantly raising viscosity. When present in the final coatings, ultrafine particles are very susceptible to oxidation due to the high surface to volume ratio.

Therefore, the need exists for methods for production of SiC particles that are less irregular, have lower aspect ratios, and exhibit improved processability. The need also exists for SiC particles that are less crystalline, possess a greater degree of amorphous character, and exhibit low thermal conductivity.

### Summary of the Invention

In general, the present disclosure relates to a method for producing amorphous SiC particles by plasma pyrolysis of a polymeric ceramic precursor.

According to one example, the present disclosure involves a method comprising subjecting a polymeric ceramic precursor to plasma spray pyrolysis to form amorphous particles of SiC.

According to a further example, the present disclosure relates to amorphous particles of SiC prepared by subjecting a polymeric ceramic precursor to plasma spray pyrolysis.

According to another example, the present disclosure involves a method comprising:
subjecting a polymeric ceramic precursor to plasma spray pyrolysis to form amorphous particles of SiC; and
applying an environmental barrier coating to a ceramic matrix composite substrate wherein the coating contains the amorphous particles of SiC.

In one example, the polymer ceramic precursor is injected as a stream of polymeric ceramic precursor droplets, e.g., atomized, into a plasma jet generated by a plasma spray torch, wherein the droplets undergo pyrolysis in the plasma jet. For example, the plasma jet can be discharged from the nozzle of a plasma spray torch and polymeric ceramic precursor droplets, e.g., atomized, can be injected into the plasma jet as a cross flow after the jet exits the nozzle. According to another example, the plasma jet is discharged from the nozzle of a plasma spray torch and polymeric ceramic precursor droplets, e.g., atomized, are injected into the jet at (or right at, or adjacent) the nozzle.

In some example, the amorphous SiC particles formed by the plasma spray pyrolysis have a nominal diameter of 1 - 25 µm.

In some example, the polymeric ceramic precursor is a liquid at room temperature. Further, in some embodiments, the polymeric ceramic precursor has a viscosity of 40 to 100 cPs (0.04 to 0.1 Pa.s) at 25°C. Additionally, in some embodiments, the polymeric ceramic precursor is a polycarbosilane.

During the pyrolysis, in one example of the present disclosure, using the plasma jet, the atomized droplets of polymeric ceramic precursor are heated to a temperature of 1000°C to 1400°C, for example, 1100 to 1200°C. In other words, the droplets are heated to a temperature of 1000°C to 1400°C, for example, 1100 to 1200°C. The plasma jet itself is at a much higher temperature, e.g., around 7000°C. In another aspect of the pyrolysis method, the plasma jet is generated by passing a flow plasma generating gas though an electrical arc, wherein the plasma generating gas is argon, a mixture of argon and helium, a mixture of argon and hydrogen, or a mixture of argon, helium, and hydrogen. For example, the flow rate for the plasma generating gas can be 35 to 60 scfh (275 to 472 cm³/s), such as 40 to 60 scfh (315 to 472 cm³/s).

According to another example of the pyrolysis method, the polymeric ceramic precursor droplets are formed by passing the polymeric ceramic precursor through an atomizer using air or an inert gas as a carrier gas.

According to further example of the pyrolysis method, the SiC particles formed in the plasma get are introduced into a quenching means to cool the particles. For example, the quenching means can be a water bath.

According to a further method aspect, an environmental barrier coating is applied to a ceramic matrix composite substrate by preparing a slurry of the amorphous SiC particles, obtained by pyrolysis of a polymeric ceramic precursor, in a solvent or dispersion medium, and applying the slurry to the ceramic matrix composite substrate. For example, according to a method aspect, a slurry of amorphous SiC particles, obtained by pyrolysis of a polymeric ceramic precursor, is applied to a ceramic matrix composite substrate as a bond coat layer.

### Brief Description of the Drawings

Implementations of the inventive concepts disclosed herein may be better understood when consideration is given to the following detailed description thereof. Such description make refers to the included drawings, which are not necessarily to scale, and which some features may be exaggerated and some features may be omitted or may be represented schematically in the interest of clarity. Like reference numerals in the drawings may represent and refer to the same or similar element, feature, or function. In the drawings:
Figure 1 is a plasma spray system wherein a plasma spray torch generates a plasma jet into which an atomized polymeric ceramic precursor is injected and resultant SiC particles are quenched and collected.
Figure 2 shows a graph of x-ray diffraction data for the amorphous SiC particles produced by the plasma spray system of Fig. 1.

### Detailed Description

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of the embodiments of the inventive concepts, numerous specific details are set forth in order to provide a more thorough understanding of the inventive concepts. It will be apparent to one skilled in the art, however, having the benefit of the instant disclosure that the inventive concepts disclosed herein may be practiced without these specific details.

In general, the present disclosure relates to methods involving subjecting a polymeric ceramic precursor to plasma spray pyrolysis to form amorphous particles of SiC, the amorphous SiC particles obtained by such methods, as well as the use of the amorphous SiC particles in preparing EBC coatings.

The SiC amorphous particles are produced by injecting a stream of polymeric ceramic precursor droplets, e.g., atomized, into a plasma plume/plasma jet generated by a plasma spray torch, also referred to as a plasma spray gun. Herein, plasma spray torch and plasma spray gun are used interchangeably. Also, herein, plasma plume and plasma jet are used interchangeably.

Plasma spray systems typically include a plasma torch/gun, a power system including an anode and cathode between which an electric arc is generated to create, a gas supply system for conveying a gas (e.g., Ar or a mixture of Ar and H and/or He) between the anode and cathode through the electric arc to create the plasma jet or plume, and a feedstock feed system for feeding material that is to be subjected to plasma spraying into the plasma jet or plume. Operational parameters include the control of the arc current, arc ignition, plasma gas flow rates, and material flow rate.

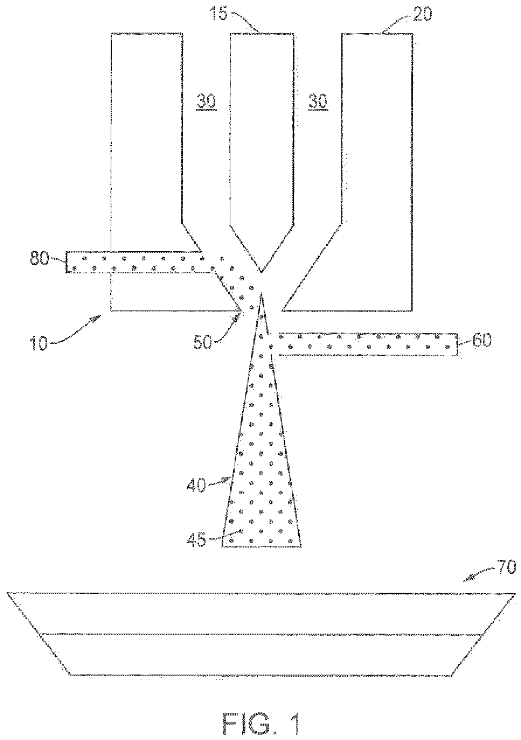

As shown in Fig. 1, an air plasma spray torch or air plasma spray gun 10 has a cathode 15 and an anode 20. An electric arc is created between cathode 15 and an anode 20. Gas flowing through passageway 30 is forced to flow through the electric arc which generates a high temperature plasma jet 40 which is discharged from the torch/gun via nozzle 50. A liquid polymeric ceramic precursor is atomized and injected via injector 60 into the jet 40 resulting in decomposition (pyrolysis) of the polymer and rapid formation of SiC amorphous particles 45. The particles are directed towards a quenching means 70, shown here as a water bath, where they are quickly quenched to form amorphous SiC particles. Rapid quenching reduces oxidation of the particles upon exiting the jet.

Fig. 1 shows the atomized polymeric ceramic precursor being injected via injector 60 into the jet 40 as a cross flow after the jet has existed the nozzle 50. Alternatively, the atomized polymeric ceramic precursor can be injected via an inlet 80 into the jet at the nozzle 50, i.e., as the jet is existing the nozzle. While Fig. 1 shows the atomized precursor being injected by injector 60 at a 90 degree angle with respect to the jet, this angle can be modified if desired. For example, the angle could be within the range of 45° to 90°.

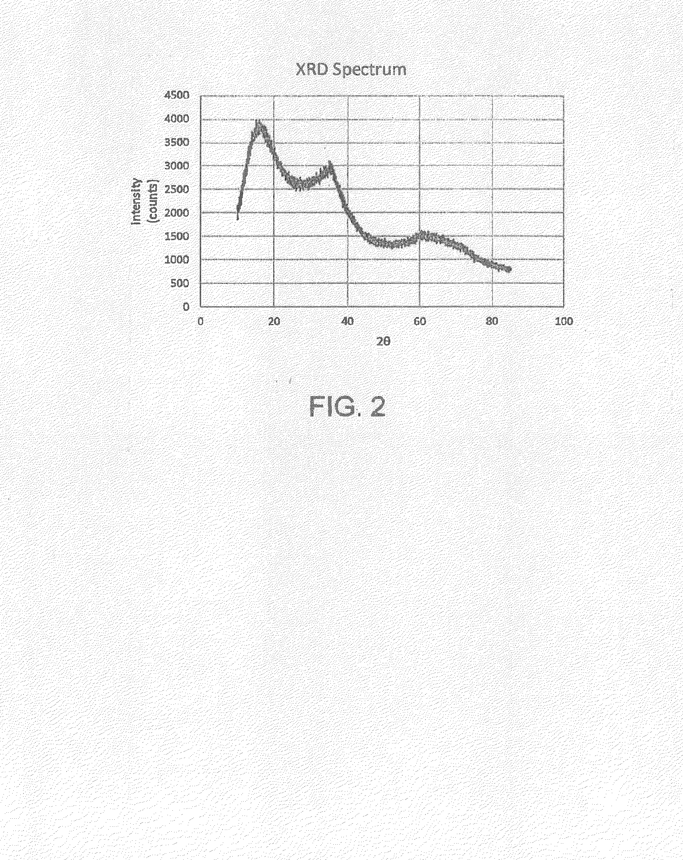

Fig. 2 shows a graph of X-ray diffraction data for amorphous SiC particles produced by an embodiment of the method of the present disclosure. The graph plots signal intensity for various angles of diffraction at their respective two theta positions. X-ray diffraction is a common technique used to determine the crystalline nature of a product. In a graph of XRD data, peak width is inversely proportional to the crystal size so that a thinner peak is indicative of a bigger crystal. The peak width indicates the consistency of the lattice spacing, i.e., the narrower the peak the more crystalline and less stressed the lattice is. As the lattice becomes more distorted the peak broadens. Thus, broader peaks are indicative of an amorphous nature. As can be seen from Fig. 2, the SiC particles produced by the method of the present disclosure have low crystallinity and a high degree of amorphous character.

Moreover, particles produced by the method of the present disclosure, while not completely spherical, do not have an aspect ratio that is as high as particles obtained by the prior art processes discussed above. For example, the majority of the particles can have an aspect ratio of 2 to 4. Additionally, the particles can exhibit fewer sharp edges and irregularities.

**In** some embodiments, the amorphous SiC particles have a nominal diameter of 1 - 25 µm. Particle size can be varied by adjusting various parameters including droplet size, viscosity of the liquid polymeric ceramic precursor, temperature of jet/plume, residence time in the jet/plume, etc.

Polymeric ceramic precursor suitable for use in the inventive process are SiC-forming polymers. It is desirable to use ceramic precursors that have a high ceramic yield. Droplet formation can be facilitated by using SiC-forming polymers have low viscosities and/or are liquid at room temperature (i.e., 25°C). **In** some embodiments, polycarbosilanes are used as the polymeric ceramic precursor. One example of a suitable polycarbosilane is StarPCS^{™} SMP-10, a commercial product available from Starfire Systems, which is liquid at room temperature and has a viscosity of 40 to 100 cPs (0.04 to 0.1 Pa.s) at 25°C.

In the plasma system, the temperature in the generated plasma jet or plume is sufficiently high to cause the polymeric ceramic precursor to undergo pyrolysis and for SiC amorphous particles to form. In some embodiments, the polymeric ceramic precursor is heated to a temperature of 1000°C to 1400°C, for example, 1100 to 1200°C, in the plasma jet.

Gases used for generating the plasma can be, for example, argon and combinations of argon with hydrogen, helium, or both hydrogen and helium. Flow rate of the plasma forming gas can vary. For example, gas flow rates of 40 to 60 scfh (315 to 472 cm³/s) can be used for plasma forming gas. A carrier gas (or atomizer gas) can be used to atomize the liquid polymeric ceramic precursor can be, for example, air, argon, or any gas that is inert with respect to the polymeric ceramic precursor or the pyrolysis reaction.

Particle residence time within the plasma jet/plume can be adjusted by varying the time between the point of injection of the liquid polymeric ceramic precursor and the point when the particles enter the quenching means. In general, the residence time, preferably, is sufficient to complete the pyrolysis reaction to the degree necessary to not adversely impact further processing and use of the amorphous SiC particles. Long residence times can adversely impact the particles by causing crystallization or resulting in oxidation of the SiC particles.

Quenching of the particles can be achieved in a number of ways. For example, the particles from the plasma torch spraying system can be sent directly into a room temperature or cold water bath for quenching. The resultant particles can then be collected from the water bath. Other suitable quenching processes may involve using a large jet of cooled gas, such as argon or nitrogen, or water mist.

The resultant amorphous SiC particles produced by the plasma torch spraying can then be optionally classified into desired size ranges before use. As mentioned above, one use of the amorphous SiC particles is in the preparation of EBCs for CMCs, for example, in the preparation of bond coats for EBCs.

Thus, in some embodiments, in method for preparation of an EBC on a CMC substrate, a layer is applied to the CMC substrate wherein the layer comprises amorphous SiC particles prepared by the plasma torch/gun spraying method described above. The layers of the EBC can include one or more bond coats layers and one or more top coat layers. These layers of the EBC can be applied to the CMC substrate by a variety of processes including atmospheric plasma spray (APS), low pressure plasma spray (LPPS), chemical vapor deposition (CVD), physical vapor Deposition (PVD), electron beam-physical vapor deposition (EB-PVD), or plasma-spray physical vapor deposition (PS-PVD), polymer deposition, and slurry coatings.

In some embodiments, a layer comprising amorphous SiC particles prepared by the plasma torch/gun spraying method is applied as a bond coat layer to a CMC substrate. The layer is formed by preparing a slurry of the amorphous SiC particles, prepared by the plasma torch/gun spraying method, in a solvent or dispersion medium, and applying the slurry to the CMC substrate, for example, by spraying.

By way of an exemplary embodiment, a method aspect of the present disclosure comprises generating a plasma jet, in a plasma torch (e.g., an Oerlikon Metco SinplexPro^{™} plasma spray gun) using, for example, an argon/hydrogen mixture as a plasma generating gas and power settings of around 520A at 42 V (+/- 10%). Liquid polycarbosilane, StarPCS^{™} SMP-10, is atomized using, for example, a BETE XA air atomizing nozzle, with air or argon as the carrier gas. The atomized polycarbosilane droplets are injected into the plasma jet as a cross flow downstream form the nozzle of the plasma torch. Flow rate and temperature of the plasma existing the nozzle are 70 scfh (551 cm³/s) and approx. 7000°C, respectively. In the jet plume, the polycarbosilane undergoes pyrolysis and amorphous SiC particles form. The residence time of the particles in the plasma jet is, for example, 0.5 to 2 msec (ms), before the particles are quenched in a water both. The distance from the nozzle to the water bath quench is about 300 mm.

By way of a further exemplary embodiment, a method aspect of the present disclosure comprises forming a slurry from the resultant amorphous SiC particles of the above exemplary embodiment. The slurry is prepared by mixing the amorphous SiC particles in water and ammonia based salts. The slurry is then applied to the surface of a SiC/SiC CMC substrate by an HVLP (High Volume Low Pressure) spray system to form a bond coat layer on the substrate.

The corresponding structures, material, acts, and equivalents of all means or steps plus function elements in the claims below are intended to include any structure, material, or act for performing the function in combination with other claimed elements are specifically claimed. The description of the present invention has been presented for purposes of illustration and description, but is not intended to be exhaustive or limited to the invention in the form disclosed. Many modifications and variations will be apparent to those of ordinary skill without departing from the scope and spirit of the invention. The embodiment was chosen and described in order to best explain the principles of the invention and the practical application, and to enable others of ordinary skill in the art to understand the invention for embodiments with various modifications as are suited to the particular use contemplated.

Modifications and equivalents may be made to the features of the claims without departing from the spirit or scope of the invention. Thus, it is intended that the present invention covers the modifications and variations disclosed above provided that these changes come within the scope of the claims and their equivalents.

## Claims

1. A method comprising subjecting a polymeric ceramic precursor to plasma spray pyrolysis to form amorphous particles of SiC (45).

2. The method according to claim 1, wherein said polymer ceramic precursor is injected as a stream of polymeric ceramic precursor droplets into a plasma jet (40) generated by a plasma spray torch (10), and said droplets undergo pyrolysis in said plasma jet (40).

3. The method according to claim 2, wherein the plasma jet (40) is discharged from a nozzle (50) of the plasma spray torch (10) and the polymeric ceramic precursor droplets are injected into the plasma jet (40) as a cross flow after the plasma jet (40) has existed the nozzle (50).

4. The method according to claim 2, wherein the plasma jet (40) is discharged from a nozzle (50) of the plasma spray torch (10) and the polymeric ceramic precursor droplets are injected into the plasma jet right at the nozzle (50).

5. The method according to any preceding claim, wherein the amorphous SiC particles (45) formed have a nominal diameter of 1 - 25 µm.

6. The method according to any preceding claim, wherein polymeric ceramic precursor is a liquid at room temperature.

7. The method according to any preceding claim, wherein polymeric ceramic precursor has a viscosity of 40 to 100 cPs (0.04 to 0.1 Pa.s) at 25°C.

8. The method according to any preceding claim, wherein polymeric ceramic precursor is a polycarbosilane.

9. The method according to claim 2 or any of claims 3 to 8 dependent, directly or indirectly, on claim 2, wherein in the plasma jet (40) the droplets are heated to a temperature of 1000°C to 1400°C.

10. The method according to claim 2 or any of claims 3 to 9 dependent, directly or indirectly, on claim 2, wherein the plasma jet (40) is generated by passing a flow plasma generating gas though an electrical arc, wherein the plasma generating gas is argon, a mixture of argon and helium, a mixture of argon and hydrogen, or a mixture of argon, helium, and hydrogen, optionally wherein the flow rate for the plasma generating gas is 40 to 60 scfh (315 to 472 cm³/s).

11. The method according to claim 2 or any of claims 3 to 10 dependent, directly or indirectly, on claim 2, wherein the droplets are formed by passing the polymeric ceramic precursor through an atomizer using air or an inert gas as a carrier gas.

12. The method according to claim 2 or any of claims 3 to 11 dependent, directly or indirectly, on claim 2, further comprising introducing the formed amorphous SiC particles (45) into a quenching means (70) to cool the particles (45), optionally wherein the quenching means (70) is a water bath (70).

13. The method of any preceding claim, further comprising:
applying an environmental barrier coating containing the formed amorphous particles of SiC (45) to a ceramic matrix composite substrate.

14. The method according to claim 13, wherein the environmental barrier coating is applied to the ceramic matrix composite substrate by preparing a slurry of the amorphous SiC particles (45) in a solvent or dispersion medium, and applying the slurry to the ceramic matrix composite substrate.

15. The method according to claim 13 or 14, wherein the environmental barrier coating is a bond coat layer.
